# EUROPEAN PATENT APPLICATION

(11) **EP 4 727 087 A1**
(43) Date of publication of application: **15.04.2026**
(21) Application number: 24881031.9
(22) Date of filing: 04.06.2024
(51) Int. Cl.: H04L 47/2483

(54) **INFORMATION PROCESSING METHOD AND RELATED DEVICE**

(30) Priority: 23.10.2023 CN 202311380290
(71) Applicant: Huawei Technologies Co., Ltd., Shenzhen, Guangdong 518129 (CN)
(72) Inventor: WANG, Haiyan, Shenzhen, Guangdong 518129 (CN)
(74) Representative: Gill Jennings & Every LLP
(86) International application number: PCT/CN2024/097231
(87) International publication number: WO 2025/086653

(57) **Abstract**

Embodiments of this application disclose an information processing method and a related device, to identify a terminal device based on an application flow. In this application, a port pre-allocation table is first received, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap. In this case, when a first public IP address and a first port number of a public network application flow are obtained, a first terminal device corresponding to the first public IP address and the first port number may be determined based on the port pre-allocation table, and the first terminal device is one of the plurality of terminal devices, so that the corresponding terminal device that sends the public network application flow can be identified, and the terminal device on which a network fault occurs can be determined when a poor quality of service event occurs, so as to improve quality of service.

## Description

This application claims priority to Chinese Patent Application No. 202311380290.2, filed with the China National Intellectual Property Administration on October 23, 2023 and entitled "INFORMATION PROCESSING METHOD AND RELATED DEVICE", which is incorporated herein by reference in its entirety.

### TECHNICAL FIELD

This application relates to the communication field, and in particular, to an information processing method and a related device.

### BACKGROUND

A broadband service refers to providing a network service for a user by a network provider. The broadband service has been popularized in home, but there is still much room for improvement in quality of the broadband service.

In a communication network of the broadband service, a terminal device may send an application flow to a gateway device, the gateway device forwards the application flow to an OLT, and the OLT forwards the application flow to an application server. The gateway device may be deployed in home. An application flow inspection (deep packet inspection, DPI) interception board may be built in the OLT, to intercept the application flow, obtain traffic information of the application flow, and upload the traffic information to an experience assurance management platform. After obtaining the traffic information, the experience assurance management platform may perform data analysis, to determine a poor quality of service event.

A source IP address of the application flow sent by the terminal device is a private network (internet protocol, IP) address. As a network address translation (network address translation, NAT) device, the gateway device may translate the private IP address of the application flow sent by the terminal device into a public IP address. Therefore, an application flow intercepted by the gateway device and traffic information obtained by the OLT are at a household level (one gateway device is considered as a household). When a poor quality of service event occurs, the experience assurance management platform can determine, based on only the traffic information, the gateway device that runs into a problem, and cannot further determine the terminal device that runs into a problem.

### SUMMARY

Embodiments of this application provide an information processing method and a related device, to identify a terminal device based on an application flow.

According to a first aspect of this application, an information processing method is provided. In this application, a port pre-allocation table is first received, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap. In this case, when a first public IP address and a first port number of a public network application flow are obtained, a first terminal device corresponding to the first public IP address and the first port number may be determined based on the port pre-allocation table, and the first terminal device is one of the plurality of terminal devices, so that the corresponding terminal device that sends the public network application flow can be identified, and then a terminal device on which a network fault occurs can be determined when a poor quality of service event occurs, so as to improve quality of service.

In some possible implementations, entries of the port pre-allocation table include a public IP address, a port number range, and device information, and the device information includes a MAC address of one of the plurality of terminal devices. In this case, a corresponding terminal device may be identified based on the MAC address.

In some possible implementations, the device information includes a device account and a device type. In this case, more information about the corresponding terminal device may be further obtained based on the device account and the device type, to improve quality of service.

In some possible implementations, the device information includes an access manner, an access frequency, and signal strength. In this case, more information about the corresponding terminal device may be further obtained based on the access manner, the access frequency, and the signal strength, to improve quality of service.

In some possible implementations, after the public network application flow is received, the first public IP address and the first port number may be obtained from the public network application flow, so that a terminal device identification apparatus can obtain first traffic information of the public network application flow.

In some possible implementations, the first traffic information is received, and the first traffic information includes the first public IP address and the first port number of the public network application flow, so that the terminal device identification apparatus obtains the first public IP address and the first port number of the public network application flow.

According to a second aspect of this application, an information processing method is provided. In this application, a port pre-allocation table is first generated, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap. Then, the port pre-allocation table is sent. In this case, when receiving an application flow, a device that receives the port pre-allocation table may obtain a public IP address and a port number of the application flow, so as to identify a corresponding terminal device, and then determine a terminal device on which a network fault occurs when a poor quality of service event occurs, thereby improving quality of service.

In some possible implementations, before the port pre-allocation table is generated, the method includes: accessing the plurality of terminal devices; recording private IP addresses and device information of the plurality of terminal devices, to obtain a plurality of private IP addresses; and determining a public IP address corresponding to each of the plurality of private IP addresses, to obtain NAT entries, where the NAT entries indicate mapping of the private IP address to the public IP address, and public IP addresses to which any two of the plurality of private IP addresses are mapped are not exactly the same. In this case, the port pre-allocation table may be generated based on the public IP address, the private IP address, and the device information.

In some possible implementations, the method further includes: receiving a private network application flow sent by a first terminal device, where a source IP address of the private network application flow is a first private IP address, and the first terminal device is one of the plurality of terminal devices; translating the first private IP address into a first public IP address based on the NAT entries, to obtain a public network application flow, where the first public IP address is a public IP address to which the first private IP address is mapped based on the NAT entries; and sending the public network application flow. In this case, a public IP address and a port number of an application flow may be obtained, so that a corresponding terminal device can be identified based on the port pre-allocation table, and then a terminal device on which a network fault occurs can be determined when a poor quality of service event occurs, so as to improve quality of service.

In some possible implementations, entries of the port pre-allocation table include a public IP address, a port number range, and device information, and the device information includes a MAC address of one of the plurality of terminal devices. In this case, a corresponding terminal device may be identified based on the MAC address.

In some possible implementations, the device information includes a device account and a device type. In this case, more information about the corresponding terminal device may be further obtained based on the device account and the device type, to improve quality of service.

In some possible implementations, the device information includes an access manner, an access frequency, and signal strength. In this case, more information about the corresponding terminal device may be further obtained based on the device account and the device type, to improve quality of service.

According to a third aspect of this application, a terminal device identification apparatus is provided. The terminal device identification apparatus is configured to perform the method according to any one of implementations of the first aspect.

According to a fourth aspect of this application, a gateway device is provided. The terminal device identification apparatus is configured to perform the method according to any one of the implementations of the second aspect.

According to a fifth aspect of this application, a computer-readable storage medium is provided. The computer-readable storage medium stores instructions. When the instructions are run on a computer, the computer is enabled to perform the method according to any one of the implementations of the first aspect, the second aspect, or the third aspect.

According to a sixth aspect of this application, a computer program product is provided. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, to enable the device to implement the method according to the first aspect or any one of the possible implementations of the first aspect.

According to a seventh aspect of this application, a communication apparatus is provided. The communication apparatus may include at least one processor, a memory, and a communication interface. The at least one processor is coupled to the memory and the communication interface. The memory is configured to store instructions, the at least one processor is configured to execute the instructions, and the communication interface is configured to communicate, under control of the at least one processor, with another communication apparatus. When the instructions are executed by the at least one processor, the at least one processor is enabled to perform the method according to the first aspect or any one of the possible implementations of the first aspect.

According to an eighth aspect of this application, a chip system is provided. The chip system includes a processor, configured to support implementation of a function in the first aspect or any one of the possible implementations of the first aspect.

In a possible design, the chip system may further include a memory, and the memory is configured to store necessary program instructions and data. The chip system may include a chip, or may include a chip and another discrete component.

For technical effects brought by any one of the third aspect to the eighth aspect or any one of the possible implementations of the third aspect to the eighth aspect, refer to technical effects brought by different possible implementations of the first aspect or the second aspect. Details are not described herein again.

### BRIEF DESCRIPTION OF DRAWINGS

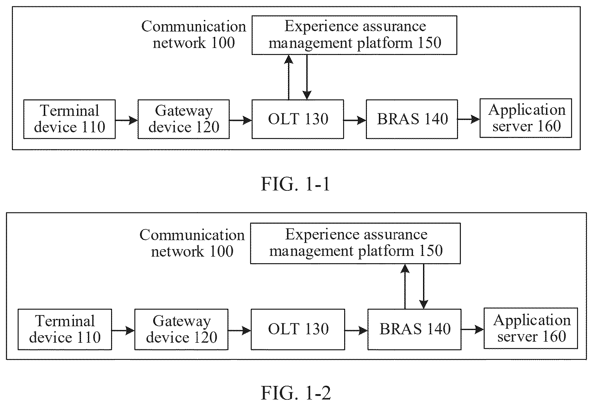

FIG. 1-1 is a diagram of a composition structure of a communication network according to an embodiment of this application;
FIG. 1-2 is a diagram of a composition structure of a communication network according to an embodiment of this application;
FIG. 2-1 is a schematic flowchart of an information processing method according to an embodiment of this application;
FIG. 2-2 is a diagram of attribution of a network fault according to this application;
FIG. 3 is a schematic flowchart of an information processing method according to an embodiment of this application;
FIG. 4 is another schematic flowchart of an information processing method according to an embodiment of this application;
FIG. 5 is another schematic flowchart of an information processing method according to an embodiment of this application;
FIG. 6 is a diagram of a structure of a terminal device identification apparatus according to an embodiment of this application;
FIG. 7 is a diagram of a structure of a gateway device according to an embodiment of this application; and
FIG. 8 is a diagram of a structure of a communication apparatus according to an embodiment of this application.

### DESCRIPTION OF EMBODIMENTS

Embodiments of this application provide an information processing method and a related device, to identify a terminal device based on an application flow.

The following describes embodiments of this application with reference to the accompanying drawings.

In the specification, the claims, and the foregoing accompanying drawings of this application, terms such as "first" and "second" are used to distinguish between similar objects, but do not necessarily describe a particular order or sequence. It should be understood that the terms used in such a way may be interchanged in proper circumstances, which is merely a manner that is used when objects that have a same attribute are described in embodiments of this application. In addition, the terms "include", "have" and any other variants thereof are intended to cover a non-exclusive inclusion, so that a process, a method, a system, a product, or a device that includes a series of units is not necessarily limited to those units, but may include another unit that is not expressly listed or that is inherent to the process, the method, the system, the product, or the device.

This application may be applied to a communication network. As shown in FIG. 1-1 and FIG. 1-2, the communication network 100 includes a terminal device 110, a gateway device 120, an optical line terminal (optical line terminal, OLT) 130, a broadband access server (broadband remote access server, BRAS) 140, an experience assurance management platform 150, and an application server 160.

The terminal device 110 may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used for the terminal device 110 are not limited in embodiments of this application.

The gateway device 120 may be an access point (access point, AP), an access controller (access controller, AC), a router/switch, or an optical network device (optical network terminal, ONT). The gateway device 120 may be disposed in home, in an office, or in another applicable scenario. For example, the ONT may be disposed in home, and is also referred to as an "optical modem". A large-scale integrated chip is used for the ONT, featuring a simple circuit, low power consumption, high reliability, and having a complete alarm status indication and comprehensive network management functions.

The router/switch is a hardware device that connects two or more user equipments, and functions as a gateway between the user equipments. The router/switch is a dedicated intelligent network device that can read a destination address of a packet and determine how to transmit the packet based on the destination address. The router/switch can understand different protocols, for example, protocols such as an Ethernet protocol used for a local area network and a transmission control protocol/internet protocol (transmission control protocol/internet protocol, TCP/IP) protocol used for the Internet. In this way, the router/switch may analyze destination addresses of packets that are transmitted via different types of networks, and translate a non-TCP/IP address into a TCP/IP address, or translate a TCP/IP address into a non-TCP/IP address; and then transmit the packets to the destination addresses through an optimal transmission path by using a routing algorithm. Therefore, the router/switch can connect a non-TCP/IP network to the Internet.

The OLT 130 is a core component of an optical fiber-based optical access network, and is equivalent to a switch or a router in a conventional communication network. In addition, the OLT 130 is a platform for providing a plurality of services. The OLT 130 is generally disposed at a central office, to provide a user-oriented optical interface of a passive optical network. Functions that may be implemented by the OLT 130 include the following: aggregating, at the central office, signals that carry various services, and sending the signals to an access network in a specific signal format for transmission to a terminal user; and sending signals from the terminal user to various service networks based on a service type.

The BRAS 140 is a novel access gateway oriented to a broadband network application, and may complete data access of a user bandwidth, implement broadband network access of inhabitants in a commercial building and in a community, and support applications such as an ISP wholesaling a service to a user. For example, a dynamic point-to-point protocol (point-to-point protocol, PPP) connection is established between the BRAS 140 and the terminal device 110. For example, a network side interface of the BRAS 140 is connected to a core network device, so that the BRAS 140 can send an accounting-start packet after the terminal device 110 goes online.

In some possible implementations, a DPI interception board may be built in the OLT 130 or the BRAS 140. The DPI interception board is configured to intercept an application flow, to obtain traffic information between the terminal device 110 and the application server 160, and upload the traffic information to the experience assurance management platform 150. It should be noted that DPI is an application layer-based traffic inspection and control technology. An enterprise and an internet service provider often use the DPI to identify and prevent a network attack, behavior of tracking a user, block malware, and monitor network traffic. The DPI checks data and metadata related to a single application flow. When the application flow approaches a checkpoint, the DPI blocks any protocol violation, virus, spam, and another exception, and prevents the application flow from passing through the checkpoint.

The experience assurance management platform 150 is configured to implement an effective connection between a physical network and a business intent, implement downward centralized management, control, and analysis of a global network, and enable, for business and service intents, resource cloudification, full-lifecycle automation, and intelligent close-loop driven by data analysis. The experience assurance management platform 150 is mainly applied to scenarios such as an operator network, a data center, an enterprise campus, and an enterprise private line, to make a network simpler, smarter, more open, and more secure, and accelerate service transformation and innovation for an operator and an enterprise. For example, the experience assurance management platform 150 may be used as a campus network analyzer, to collect network data in real time through telemetry (Telemetry), learn network behavior and identify a fault mode by using big data analysis and a machine learning algorithm, so as to help operation and maintenance personnel actively discover most network problems and create excellent network service assurance experience.

In embodiments of this application, the experience assurance management platform 150 is used as a home network management system, and is used as a cloud management system to remotely manage the home gateway device 120. In embodiments of this application, after intercepting data of an application flow, the DPI interception board built in the OLT 130 or the BRAS 140 obtains traffic information between the gateway device 120 and the server, and uploads the traffic information to the experience assurance management platform 150. After obtaining the traffic information, the experience assurance management platform 150 may perform data analysis to determine a poor quality of service event.

The application server 160 is configured to respond to a service request and perform processing, and provide a reliable service. For example, the application server 160 receives a service request of the terminal device 110, and responds to the service request. Therefore, the application server 160 should generally have capabilities of undertaking a service and ensuring the service, and the application server 160 needs to have a high processing capability, high stability, high reliability, high security, scalability, and manageability. In embodiments of this application, the application server 160 may be an x86 server. The x86 server is also referred to as a complex instruction set computer (complex instruction set computer, CISC) architecture server, which is commonly referred to as a personal computer (personal computer, PC) server. The x86 server is based on a PC system architecture and uses an Intel (Intel) chip or another processor chip compatible with an x86 instruction set and a Windows operating system.

The application server 160 may vary greatly with a configuration or performance, and may include at least one central processing unit (central processing unit, CPU) (for example, at least one processor) and a memory, and at least one storage medium (for example, at least one mass storage device) for storing an application program or data. The memory and the storage media may be configured for ephemeral storage or persistent storage. The program stored in the storage medium may include at least one module, and each module may include a series of instruction operations for the application server 160. Further, the central processing unit may be configured to communicate with the storage medium, to perform, on the application server 160, a series of instruction operations in the storage medium. The application server 160 may further include at least one power supply, at least one wired or wireless network interface, at least one input/output interface, and/or at least one operating system like Windows Server, Mac OS X, Unix, Linux, FreeBSD, and NetWare. In some feasible implementations, the application server 160 may alternatively be a cloud server. This is not limited herein.

In the communication network 100, the terminal device 110 may send an application flow to the gateway device 120, and a source IP address of the application flow is a private IP address. Then, the gateway device 120 translates the private IP address of the application flow into a public IP address to obtain a new application flow, and the gateway device 120 forwards the new application flow to the OLT 130. Then, the OLT 130 forwards the new application flow to the BRAS 140, and the BRAS 140 sends the new application flow to the application server 160 via a bearer network, so that the application server 160 provides a service for the terminal device 110 based on the new application flow. The gateway device 120 may be disposed in home. As shown in FIG. 1-1, an application flow inspection (deep packet inspection, DPI) interception board is built in the OLT 130, and is configured to: intercept data of an application flow, obtain traffic information of a new application flow between the gateway device 120 and the application server 160, and upload the traffic information to the experience assurance management platform 150. As shown in FIG. 1-2, a DPI interception board is built in the BRAS 140, and is configured to: intercept data of an application flow, obtain traffic information of a new application flow between the gateway device 120 and the application server 160, and upload the traffic information to the experience assurance management platform 150. After obtaining the traffic information, the experience assurance management platform 150 may perform data analysis to determine a poor quality of service event.

However, because a source IP address of the new application flow sent by the gateway device 120 to the OLT 130 is a public IP address, the traffic information intercepted by the DPI is at a household level (one ONT is considered as one household). When a poor quality of service event occurs, the experience assurance management platform 150 can determine, based on only the traffic information, the gateway device 120 that runs into a problem, and cannot further determine the terminal device 110 that runs into a problem.

Therefore, this application provides an information processing method and a related device, to identify a terminal device based on an application flow.

In this application, a port pre-allocation table is first received, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap. In this case, when a first public IP address and a first port number of a public network application flow are obtained, a first terminal device corresponding to the first public IP address and the first port number may be determined based on the port pre-allocation table, and the first terminal device is one of the plurality of terminal devices, so that the corresponding terminal device that sends the public network application flow can be identified, and the terminal device on which a network fault occurs can be determined when a poor quality of service event occurs, so as to improve quality of service.

In this application, an OLT or a BRAS may intercept an application flow and identify a terminal device based on an application flow. Alternatively, an OLT or a BRAS may obtain traffic information based on an application flow and send the traffic information to an experience assurance management platform, and then the experience assurance management platform identifies a terminal device based on the traffic information. The following provides separate descriptions by using four embodiments. Embodiment 1 is used to describe that the OLT intercepts the application flow and identifies the terminal device based on the application flow. Embodiment 2 is used to describe that the BRAS intercepts the application flow and identifies the terminal device based on the application flow. Embodiment 3 is used to describe that the OLT obtains the traffic information based on the application flow and sends the traffic information to the experience assurance management platform, and then the experience assurance management platform identifies the terminal device based on the traffic information. Embodiment 4 is used to describe that the BRAS obtains the traffic information based on the application flow and sends the traffic information to the experience assurance management platform, and then the experience assurance management platform identifies the terminal device based on the traffic information.

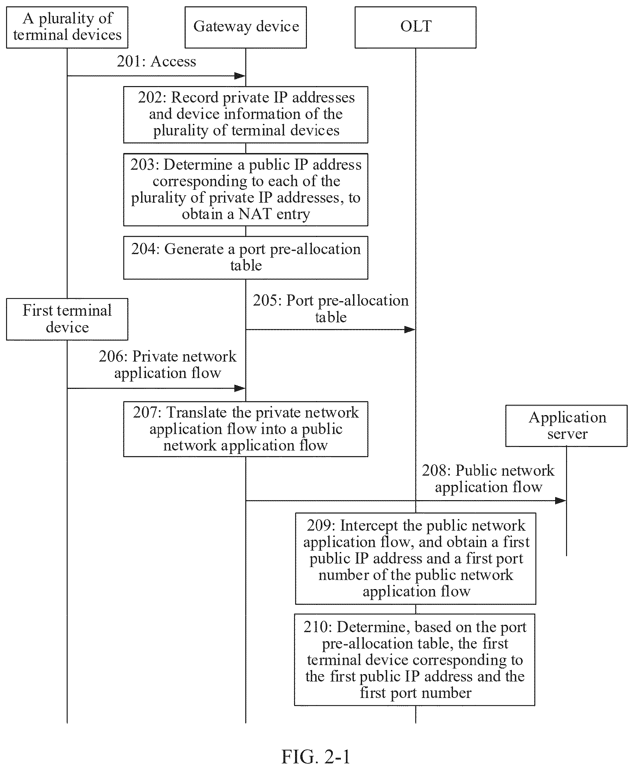

As shown in FIG. 2-1, an information processing method provided in Embodiment 1 of this application mainly includes the following steps.

201: A gateway device accesses a plurality of terminal devices.

In this embodiment of this application, after being powered on, the terminal device may access the gateway device. In some possible implementations, each of the plurality of terminal devices may be connected to the gateway device through a transmission medium (for example, a twisted pair) or in a wireless manner (for example, Wi-Fi). This is not limited herein.

For example, a notebook computer or a smart television (the terminal device) may be connected to an "optical modem" (an ONT) via a twisted pair (in a wired manner) or via Wi-Fi (in a wireless manner). Alternatively, a notebook computer or a smart television (the terminal device) is connected to a home router via Wi-Fi (in a wireless manner), and the home router is connected to an "optical modem" (an ONT) via a twisted pair. This is not limited herein.

For another example, a mobile phone or a tablet (the terminal device) may be connected to an "optical modem" (an ONT) via Wi-Fi. Alternatively, a mobile phone or a tablet (the terminal device) is connected to a home router via Wi-Fi (in a wireless manner), and the home router is connected to an "optical modem" (an ONT) via a twisted pair. This is not limited herein.

202: The gateway device records private IP addresses and device information of the plurality of terminal devices, to obtain a plurality of private IP addresses.

In this embodiment of this application, after the plurality of terminal devices access the gateway device, each of the plurality of terminal devices may communicate with a dynamic host configuration protocol (dynamic host configuration protocol, DHCP) server via the gateway device, so that each of the plurality of terminal devices obtains a private IP address (including a subnet mask) configured by the DHCP server. In this case, each of the plurality of terminal devices may access a network based on the configured private IP address, to communicate with another device that accesses the network, for example, an application server that provides a service.

It should be noted that private IP addresses that are configured for a plurality of terminal devices accessing a same gateway device are different. For example, the plurality of terminal devices are respectively a mobile phone, a tablet computer, a notebook computer, a smartwatch, smart glasses, and a smart television, and configured private IP addresses that are obtained by the plurality of terminal devices are respectively 192.168.1.5, 192.168.1.6, 192.168.1.7, 192.168.1.8, 192.168.1.9 and 192.168.1.10. This is not limited herein.

In this embodiment of this application, after the private IP address is configured for each of the plurality of terminal devices, the gateway device may record the private IP address of each of the plurality of terminal devices, to obtain the plurality of private IP addresses.

203: The gateway device determines a public IP address corresponding to each of the plurality of private IP addresses, to obtain a NAT entry, where the NAT entry indicates mapping of a private IP address to a public IP address, and public IP addresses to which any two of the plurality of private IP addresses are mapped are not exactly the same.

In some possible implementations, the gateway device may allocate a specific quantity of public IP addresses, for example, 202.49.1.1~255. For a plurality of terminal devices in a local area network formed by the gateway device, public IP addresses that the gateway device allocates to different terminal devices may not be exactly the same. In other words, a same public IP address or different public IP addresses may be allocated to two terminal devices accessing a same gateway device.

For example, Table 1 shows an example of different public IP addresses that the gateway device allocates to different terminal devices.

**Table 1**

| Device type | MAC address | Public IP address |
|---|---|---|
| Mobile phone | AF:XX | 202.49.1.2 |
| Tablet computer | EF:XX | 202.49.1.2 |
| Notebook computer | AE:FE | 202.49.1.2 |
| Smartwatch | BF:XX | 202.49.1.3 |
| Smart glasses | CF:XX | 202.49.1.3 |
| Smart television | DE:FE | 202.49.1.3 |

The public IP addresses allocated to the mobile phone, the tablet computer, and the notebook computer (terminal device) are all 202.49.1.2, and the public IP addresses allocated to the smartwatch, the smart glasses, and the smart television (terminal device) are all 202.49.1.3. The MAC address is a unique identifier of a terminal device.

In this embodiment of this application, after the gateway device allocates the public IP addresses to the plurality of terminal devices, the gateway device may generate corresponding NAT entries. In some possible implementations, there are a plurality of NAT entries, and each entry means mapping of a private IP address to a public IP address. It should be noted that different private IP addresses may be mapped to a same public IP address.

For example, Table 2 shows an example of the NAT entries generated by the gateway device for the plurality of terminal devices.

**Table 2**

| Private IP address | Public IP address |
|---|---|
| 192.168.1.5 | 202.49.1.2 |
| 192.168.1.6 | 202.49.1.2 |
| 192.168.1.7 | 202.49.1.2 |
| 192.168.1.8 | 202.49.1.3 |
| 192.168.1.9 | 202.49.1.3 |
| 192.168.1.10 | 202.49.1.3 |

Private IP addresses 192.168.1.5, 192.168.1.6, and 192.168.1.7 are mapped to a same public IP address 202.49.1.2, and private IP addresses 192.168.1.8, 192.168.1.9, and 192.168.1.10 are mapped to a same public IP address 202.49.1.3.

In some possible implementations, the NAT entry may further include device information of each of the plurality of terminal devices, for example, a device type, a MAC address, and a device account. This is not limited herein. For example, Table 3 shows another example of the NAT entries generated by the gateway device for the plurality of terminal devices.

**Table 3**

| Device type | MAC address | Private IP address | Public IP address | Device account |
|---|---|---|---|---|
| Mobile phone | AF:XX | 192.168.1.5 | 202.49.1.2 | 35... |
| Tablet | EF:XX | 192.168.1.6 | 202.49.1.2 | 26... |
| Television | AE:FE | 192.168.1.7 | 202.49.1.2 | 18... |
| Smartwatch | BF:XX | 192.168.1.8 | 202.49.1.3 | 26... |
| Smart glasses | CF:XX | 192.168.1.9 | 202.49.1.3 | 36... |
| Smart television | DE:FE | 192.168.1.10 | 202.49.1.3 | 27... |

In some possible implementations, the NAT entry may further include network information of each of the plurality of terminal devices, for example, an access manner, a frequency band for access (if access is performed via Wi-Fi), and signal strength. This is not limited herein. For example, Table 4 shows another example of the NAT entries generated by the gateway device for the plurality of terminal devices.

**Table 4**

| Device type | MAC address | Private IP address | Public IP address | Device account | Access manner | Frequency band for access | Signal strength |
|---|---|---|---|---|---|---|---|
| Mobile phone | AF:XX | 192.168.1.5 | 202.49.1.2 | 35... | Wi-Fi | 2.4 GHz | 6 dB |
| Tablet computer | EF:XX | 192.168.1.6 | 202.49.1.2 | 26... | Wi-Fi | 5.0 GHz | 3 dB |
| Notebook computer | AE:FE | 192.168.1.7 | 202.49.1.2 | 18... | Wired | - | - |
| Smartwatch | BF:XX | 192.168.1.8 | 202.49.1.3 | 26... | Wi-Fi | 2.4 GHz | 6 dB |
| Smart glasses | CF:XX | 192.168.1.9 | 202.49.1.3 | 36... | Wi-Fi | 5.0 GHz | 3 dB |
| Smart television | DE:FE | 192.168.1.10 | 202.49.1.3 | 27... | Wired | - | - |

In some possible implementations, the NAT entry may further include other information. This is not limited herein.

204: The gateway device generates a port pre-allocation table, where the port pre-allocation table indicates public IP addresses and port number ranges that are respectively allocated to the plurality of terminal devices, the public IP addresses allocated to the plurality of terminal devices are not exactly the same, and in the port pre-allocation table, port number ranges that are allocated to any two terminal devices to which a same public IP address is allocated do not overlap.

In some possible implementations, after the gateway device generates the NAT entries corresponding to the plurality of terminal devices, the gateway device may allocate a port number range (that is, one or more port numbers) to the plurality of terminal devices each based on the NAT entries, to obtain the port pre-allocation table. In the port pre-allocation table, different port numbers may be allocated to different terminal devices having a same public IP address, and the port numbers allocated to the different terminal devices having the same public IP address do not overlap.

In some possible implementations, the port pre-allocation table includes a plurality of entries, where each entry includes a public IP address, a port number range, and device information, and the device information includes a MAC address of one of the plurality of terminal devices.

For example, Table 5 shows an example of the port pre-allocation table generated by the gateway device for the plurality of terminal devices.

**Table 5**

| MAC address | Public IP address | Port number range |
|---|---|---|
| AF:XX | 202.49.1.2 | 10001 to 11000 |
| EF:XX | 202.49.1.2 | 11001 to 12000 |
| AE:FE | 202.49.1.2 | 12001 to 13000 |
| BF:XX | 202.49.1.3 | 10001 to 11000 |
| CF:XX | 202.49.1.3 | 11001 to 12000 |
| DE:FE | 202.49.1.3 | 12001 to 13000 |

Port numbers allocated to each of the mobile phone (MAC address: AF:XX) and the smartwatch (MAC address: BF:XX) are 10001 to 11000, but the public IP addresses corresponding to the mobile phone and the smartwatch are different. Port numbers allocated to each of the tablet computer (MAC address: EF:XX) and the smart glasses (MAC address: CF:XX) are 11001 to 12000, but the public IP addresses corresponding to the tablet computer (MAC address: EF:XX) and the smart glasses (MAC address: CF:XX) are different. Port numbers allocated to the each of notebook computer and the smart television are 12001 to 13000, but the public IP addresses corresponding to the notebook computer and the smart television are different.

It should be noted that the port number is used for distinguishing between different terminal devices having a same public IP address. For example, the mobile phone and the tablet computer have the same public IP address 202.49.1.2, but the port number range of the mobile phone is 10001 to 11000, and the port number range of the tablet computer is 11001 to 12000. If a public IP address of an application flow is 202.49.1.2, and a port number of the application flow is 10010, it may be determined that a transmit end of the application flow is the mobile phone. If a public IP address of an application flow is 202.49.1.2, and a port number of the application flow is 11010, it may be determined that a transmit end of the application flow is the tablet computer.

It should be noted that for one terminal device, different data flows may be distinguished based on different port numbers. For example, for the mobile phone, the public IP address of the mobile phone is 202.49.1.2, and the port number range is 10001 to 11000. In this case, a port number of an application flow sent by chat software of the mobile phone is 10001, and a port number of an application flow sent by game software of the mobile phone is 10002.

In some possible implementations, the gateway device may generate a fixed port pre-allocation table for all port numbers. For example, all port numbers of the gateway device are 10001 to 13000, and port number ranges of 10001 to 11000, 11001 to 12000, and 12001 to 13000 are respectively allocated to the mobile phone, the tablet computer, and the notebook computer that have the same public IP address.

In some possible implementations, the gateway device may generate a fixed port pre-allocation table for some port numbers, and other port numbers are to be allocated. When port numbers of a terminal device are insufficient, more port numbers may be allocated to the terminal device, to perform port number allocation in a semi-dynamic manner. For example, all port numbers of the gateway device are 10001 to 20000, and port number ranges of 10001 to 11000, 11001 to 12000, and 12001 to 13000 are respectively allocated to the mobile phone, the tablet computer, and the notebook computer that have the same public IP address. Remaining to-be-allocated port numbers are 13001 to 20000. When port numbers of the notebook computer are insufficient, 13001 to 14000 may be allocated to the notebook computer.

In some possible implementations, the gateway device may generate a port pre-allocation table that is not fixed, and set all port numbers as to-be-allocated port numbers. When a terminal device needs a port number, the gateway device allocates port numbers to the terminal device, to perform port number allocation in a fully dynamic manner. For example, all port numbers of the gateway device are 10001 to 20000. For the mobile phone, the tablet computer, and the notebook computer that have the same public IP address, when the mobile phone goes online, a port number range allocated by the gateway device to the mobile phone is 10001 to 11000; when the tablet computer goes online, a port number range allocated by the gateway device to the tablet computer is 11001 to 12000; and when the notebook computer goes online, a port number range allocated by the gateway device to the notebook computer is 12001 to 13000. Remaining to-be-allocated port numbers are 13001 to 20000. When port numbers of the notebook computer are insufficient, 13001 to 14000 may be allocated to the notebook computer. When port numbers of the mobile phone are insufficient, 14001 to 15000 may be allocated to the mobile phone. When port numbers of the tablet computer are insufficient, 15001 to 16000 may be allocated to the tablet computer. Remaining port numbers are still to be allocated.

In some possible implementations, port numbers may be allocated in another manner. This is not limited herein.

In some possible implementations, the device information includes a device account and a device type of one of the plurality of terminal devices.

For example, Table 6 shows an example of the port pre-allocation table generated by the gateway device for the plurality of terminal devices.

**Table 6**

| Device account | Device type | MAC address | Public IP address | Port number range |
|---|---|---|---|---|
| 35... | Mobile phone | AF:XX | 202.49.1.2 | 10001 to 11000 |
| 26... | Tablet computer | EF:XX | 202.49.1.2 | 11001 to 12000 |
| 18... | Notebook computer | AE:FE | 202.49.1.2 | 12001 to 13000 |
| 26... | Smartwatch | BF:XX | 202.49.1.3 | 10001 to 11000 |
| 36... | Smart glasses | CF:XX | 202.49.1.3 | 11001 to 12000 |
| 27... | Smart television | DE:FE | 202.49.1.3 | 12001 to 13000 |

In some possible implementations, the device information includes an access manner, an access frequency (if access is performed via Wi-Fi), and signal strength of one of the plurality of terminal devices.

For example, Table 7 shows an example of the port pre-allocation table generated by the gateway device for the plurality of terminal devices.

**Table 7**

| Device account | Device type | MAC address | Public IP address | Port number range | Access manner | Frequency band for access | Signal strength |
|---|---|---|---|---|---|---|---|
| 35... | Mobile phone | AF:XX | 202.49.1.2 | 10001 to 11000 | Wi-Fi | 2.4 GHz | 6 dB |
| 26... | Tablet computer | EF:XX | 202.49.1.2 | 11001 to 12000 | Wi-Fi | 5.0 GHz | 3 dB |
| 18... | Notebook computer | AE:FE | 202.49.1.2 | 12001 to 13000 | Wired | - | - |
| 26... | Smartwatch | BF:XX | 202.49.1.3 | 10001 to 11000 | Wi-Fi | 2.4 GHz | 6 dB |
| 36... | Smart glasses | CF:XX | 202.49.1.3 | 11001 to 12000 | Wi-Fi | 5.0 GHz | 3 dB |
| 27... | Smart television | DE:FE | 202.49.1.3 | 12001 to 13000 | Wired | - | - |

205: The gateway device sends the port pre-allocation table to an OLT.

In this embodiment of this application, after generating the port pre-allocation table, the gateway device may send the port pre-allocation table to the OLT. In some possible implementations, the gateway device may periodically send the port pre-allocation table to the OLT, or may update the port pre-allocation table to obtain an updated port pre-allocation table and then send the updated pre-allocation table to the OLT. This is not limited herein.

206: A first terminal device sends a private network application flow to the gateway device, where a source IP address of the private network application flow is a first private IP address, and the first terminal device is one of the plurality of terminal devices.

In this embodiment of this application, the first terminal device is one of a plurality of terminal devices that are connected to the gateway device. The first private IP address is a private IP address configured for the first terminal device, and a first port number is related to a service to which the private network application flow belongs. After the first terminal device accesses the gateway device, the first terminal device may send the private network application flow to the gateway device. A destination of the private network application flow is an application server, the source IP address of the private network application flow is the first private IP address of the first terminal device, and a source port number of the private network application flow is the first port number.

For example, the first terminal device is the mobile phone, the source IP address of the private network application flow is 192.168.1.5 (that is, the first private IP address), that is, a private IP address of the mobile phone, the private network application flow comes from chat software, and the source port number of the private network application flow is 10001.

For example, Table 8 shows an example of a plurality of application flows sent by the first terminal device to the gateway device.

**Table 8**

| Timestamp | Private IP address | Port number |
|---|---|---|
| 11:00 | 192.168.1.5 | 10001 |
| 11:01 | 192.168.1.5 | 11010 |
| 12:00 | 192.168.1.5 | 11011 |

As shown in Table 8, source IP addresses of the plurality of application flows are the private IP address 192.168.1.5, which indicates that the plurality of application flows come from a same terminal device, and timestamps at which the application flows are sent are respectively 11:00, 11:01, and 12:00. However, port numbers of the plurality of application flows are different. Therefore, it may be determined that the application flows come respectively from different types of applications, for example, chat software, a game application, and a shopping application.

207: The gateway device translates the private network application flow into a public network application flow, where a source IP address of the public network application flow is a first public IP address corresponding to the first private IP address.

In this embodiment of this application, after receiving the private network application flow, the gateway device may obtain the first private IP address of the private network application flow, and determine, based on the NAT entry, the first public IP address corresponding to the first private IP address. For example, the first private IP address is 192.168.1.5. Based on the NAT entries shown in Table 2, it may be determined that the corresponding first public IP address is 202.49.1.2. For another example, the first private IP address is 192.168.1.10. Based on the NAT entries shown in Table 2, it may be determined that the corresponding first public IP address is 202.49.1.3.

It should be noted that the gateway device does not change the source port number of the private network application flow. In other words, a source port number of the public network application flow is still the first port number.

For example, Table 9 shows an example of the plurality of application flows that are received by the gateway device and that are sent by different terminal devices.

**Table 9**

| Timestamp | Private IP address | Port number |
|---|---|---|
| 11:00 | 192.168.1.5 | 10001 |
| 11:01 | 192.168.1.5 | 11010 |
| 11:40 | 192.168.1.6 | 10001 |
| 11:45 | 192.168.1.6 | 10001 |
| 11:50 | 192.168.1.8 | 11011 |
| 12:00 | 192.168.1.5 | 11011 |

As shown in Table 9, application flows having a same private IP address come from a same terminal device. For example, three application flows having the private IP address 192.168.1.5 come from a same terminal device, two application flows having the private IP address 192.168.1.6 come from another same terminal device, and an application flow having the private IP address 192.168.1.8 comes from another terminal device. It can be learned that the foregoing six application flows are from three different terminal devices. If port numbers of the three application flows from the same terminal device (having the private IP address 192.168.1.5) are different, it indicates that the three application flows are from different application types. If port numbers of the two application flows from the same terminal device (having the private IP address 192.168.1.6) are the same, it indicates that the two application flows are from a same application type.

In an example, then, the gateway device may translate the private IP addresses of the plurality of application flows shown in Table 9 into public IP addresses. For example, Table 10 shows an example in which the gateway device translates the private IP addresses of the received plurality of application flows into the public IP addresses.

**Table 10**

| Timestamp | Public IP address | Port number |
|---|---|---|
| 11:00 | 202.49.1.2 | 10001 |
| 11:01 | 202.49.1.2 | 11010 |
| 11:40 | 202.49.1.2 | 10001 |
| 11:45 | 202.49.1.2 | 10001 |
| 11:50 | 202.49.1.3 | 11011 |
| 12:00 | 202.49.1.2 | 11011 |

As shown in Table 10, if private IP addresses are 192.168.1.5 and 192.168.1.6, it may be determined, according to Table 3 to Table 5, that a corresponding public IP address is 202.49.1.2. If a private IP address is 192.168.1.8, it may be determined, according to Table 3 to Table 5, that a corresponding public IP address is 202.49.1.3. In this way, Table 10 is obtained. However, the gateway device does not change a port number of an application flow.

208: The gateway device sends the public network application flow.

In this embodiment of this application, after the gateway device translates the first private IP address of the private network application flow into the first public IP address and obtains the public network application flow, the gateway device may send the public network application flow to the application server.

209: The OLT intercepts the public network application flow, and obtains the first public IP address and the first port number of the public network application flow.

In this embodiment of this application, the OLT may obtain the source IP address of the public network application flow, to obtain the first public IP address. The OLT may further obtain a port number of the public network application flow, to obtain the first port number. For example, the OLT may obtain a quintuple (a source IP address, a source port number, a destination IP address, a destination port number, and a transport layer protocol) of the public network application flow, where the source IP address is the first public IP address, and the source port number is the first port number. For example, the first port number is 10001, and the first public IP address is 202.49.1.2.

210: The OLT determines, based on the port pre-allocation table, the first terminal device corresponding to the first public IP address and the first port number, where the first terminal device is one of the plurality of terminal devices.

In this embodiment of this application, when the OLT determines that a data flow corresponding to the private network application flow is a poor quality of service event, the OLT may identify the corresponding first terminal device based on the first port number of the private network application flow, the first public IP address, and the port pre-allocation table. For example, the first port number is 10001, and the first public IP address is 202.49.1.2. Based on the port pre-allocation table shown in Table 5, it may be determined that the first terminal device is a terminal device having a MAC address being AF:XX. For example, based on the port pre-allocation table shown in Table 6, it may be determined that the first terminal device is a terminal device having a MAC address being AF:XX, a device type being the mobile phone, and a device account being 35.... For example, based on the port pre-allocation table shown in Table 7, it may be determined that the first terminal device is a terminal device having a MAC address being AF:XX, a device type being the mobile phone, a device account being 35..., an access manner being Wi-Fi, a frequency band for access being 2.4 GHz, and signal strength being 6 dB.

For example, Table 11 shows an example in which the OLT identifies a corresponding terminal device based on public IP addresses of a plurality of received application flows and a port pre-allocation table (Table 5 is used as an example).

**Table 11**

| Timestamp | Public IP address | Port number | MAC address |
|---|---|---|---|
| 11:00 | 202.49.1.2 | 10001 | AF:XX |
| 11:01 | 202.49.1.2 | 11010 | EF:XX |
| 11:40 | 202.49.1.2 | 10001 | AF:XX |
| 11:45 | 202.49.1.2 | 10001 | AF:XX |
| 11:50 | 202.49.1.3 | 11011 | CF:XX |
| 12:00 | 202.49.1.2 | 11011 | EF:XX |

As shown in Table 11, a MAC address of a terminal device from which each application flow comes may be determined. Because the MAC address is used as a unique identifier of the terminal device, a corresponding terminal device is determined.

In some possible implementations, if the port pre-allocation table is shown in Table 6 and 7, the OLT may further determine more information about the terminal device.

For example, Table 12 shows an example in which the OLT identifies more information about a corresponding terminal device based on public IP addresses of a plurality of received application flows and a port pre-allocation table (Table 6 is used as an example).

**Table 12**

| Timestamp | Public IP address | Port number | MAC address | Device account | Device type |
|---|---|---|---|---|---|
| 11:00 | 202.49.1.2 | 10001 | AF:XX | 35... | Mobile phone |
| 11:01 | 202.49.1.2 | 11010 | EF:XX | 26... | Tablet computer |
| 11:40 | 202.49.1.2 | 10001 | AF:XX | 35... | Mobile phone |
| 11:45 | 202.49.1.2 | 10001 | AF:XX | 35... | Mobile phone |
| 11:50 | 202.49.1.3 | 11011 | CF:XX | 36... | Smart glasses |
| 12:00 | 202.49.1.2 | 11011 | EF:XX | 26... | Tablet computer |

As shown in Table 12, a device account and a device type of a terminal device from which each application flow comes may be determined.

For example, Table 13 shows an example in which the OLT identifies more information about a corresponding terminal device based on public IP addresses of a plurality of received application flows and a port pre-allocation table (Table 7 is used as an example).

**Table 13**

| Timestamp | Public IP address | Port number | MAC address | Device account | Device type | Access manner | Frequency band for access | Signal strength |
|---|---|---|---|---|---|---|---|---|
| 11:00 | 202.49.1.2 | 10001 | AF:XX | 35... | Mobile phone | Wi-Fi | 2.4 GHz | 6 dB |
| 11:01 | 202.49.1.2 | 11010 | EF:XX | 26... | Tablet computer | Wi-Fi | 5.0 GHz | 3 dB |
| 11:40 | 202.49.1.2 | 10001 | AF:XX | 35... | Mobile phone | Wi-Fi | 2.4 GHz | 6 dB |
| 11:45 | 202.49.1.2 | 10001 | AF:XX | 35... | Mobile phone | Wi-Fi | 2.4 GHz | 6 dB |
| 11:50 | 202.49.1.3 | 11011 | CF:XX | 36... | Smart glasses | Wi-Fi | 5.0 GHz | 3 dB |
| 12:00 | 202.49.1.2 | 11011 | EF:XX | 26... | Tablet computer | Wi-Fi | 5.0 GHz | 3 dB |

As shown in Table 13, a device account and a device type of a terminal device from which each application flow comes may be determined.

In this application, a port pre-allocation table is first received, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap. In this case, when a first public IP address and a first port number of a public network application flow are obtained, a first terminal device corresponding to the first public IP address and the first port number may be determined based on the port pre-allocation table, and the first terminal device is one of the plurality of terminal devices, so that the corresponding terminal device that sends the public network application flow can be identified, and then the terminal device on which a network fault occurs can be determined when a poor quality of service event occurs, so as to improve quality of service.

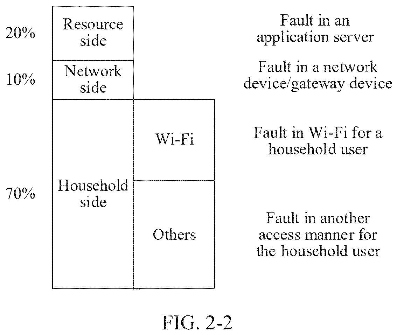

For example, as shown in FIG. 2-2, currently, 20% of network problems are attributed to a resource side (that is, a server, meaning that a corresponding server may be determined for 20% of poor quality of events), 10% of network problems are attributed to a network side (that is, a gateway device, a BRAS, an OLT, and the like, meaning that a corresponding gateway device, BRAS, and OLT may be determined for 10% of poor of quality events), and the remaining 70% of network problems are attributed to a household side (that is, a terminal device, where there is a network problem in a terminal device that performs access via Wi-Fi, or there is a network problem in a terminal device that performs access in another manner). In this application, a terminal device is identified, to determine a source of the remaining 70% of network problems.

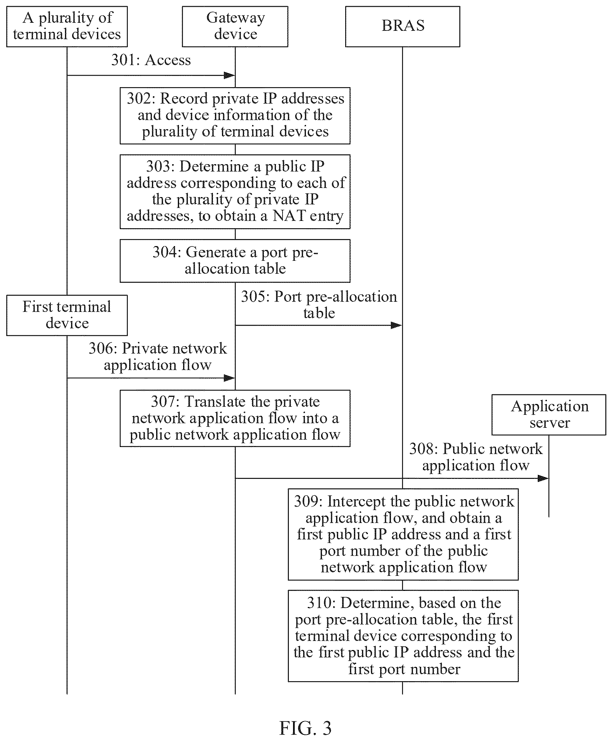

As shown in FIG. 3, an information processing method provided in Embodiment 2 of this application mainly includes the following steps.

301: A gateway device accesses a plurality of terminal devices.

302: The gateway device records private IP addresses and device information of the plurality of terminal devices, to obtain a plurality of private IP addresses.

303: The gateway device determines a public IP address corresponding to each of the plurality of private IP addresses, to obtain a NAT entry, where the NAT entry indicates mapping of the private IP address to the public IP address, and public IP addresses to which any two of the plurality of private IP addresses are mapped are not exactly the same.

304: The gateway device generates a port pre-allocation table, where the port pre-allocation table indicates public IP addresses and port number ranges respectively allocated to the plurality of terminal devices, the public IP addresses allocated to the plurality of terminal devices are not exactly the same, and in the port pre-allocation table, port number ranges that are allocated to any two terminal devices to which a same public IP address is allocated do not overlap.

Steps 301 to 304 are the same as steps 201 to 204, and details are not described herein again.

305: The gateway device sends the port pre-allocation table to a BRAS.

In this embodiment of this application, after generating the port pre-allocation table, the gateway device may send the port pre-allocation table to the BRAS. In some possible implementations, the gateway device may periodically send the port pre-allocation table to the BRAS, or may send the updated pre-allocation table to the BRAS after updating the port pre-allocation table and obtaining the updated port pre-allocation table. This is not limited herein.

306: A first terminal device sends a private network application flow to the gateway device, a source IP address of the private network application flow is a first private IP address, and the first terminal device is one of the plurality of terminal devices.

307: The gateway device translates the private network application flow into a public network application flow, where a source IP address of the public network application flow is a first public IP address corresponding to the first private IP address.

308: The gateway device sends the public network application flow.

Steps 306 to 308 are the same as steps 206 to 208, and details are not described herein again.

309: The BRAS intercepts the public network application flow, and obtains the first public IP address and a first port number of the public network application flow.

310: The BRAS determines, based on the port pre-allocation table, a first terminal device corresponding to the first public IP address and the first port number, where the first terminal device is one of the plurality of terminal devices.

Refer to the steps performed by the OLT in steps 209 and 210. Details are not described herein again.

In this application, a port pre-allocation table is first received, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap. In this case, when a first public IP address and a first port number of a public network application flow are obtained, a first terminal device corresponding to the first public IP address and the first port number may be determined based on the port pre-allocation table, and the first terminal device is one of the plurality of terminal devices, so that the corresponding terminal device that sends the public network application flow can be identified, and then a terminal device on which a network fault occurs can be determined when a poor quality of service event occurs, so as to improve quality of service.

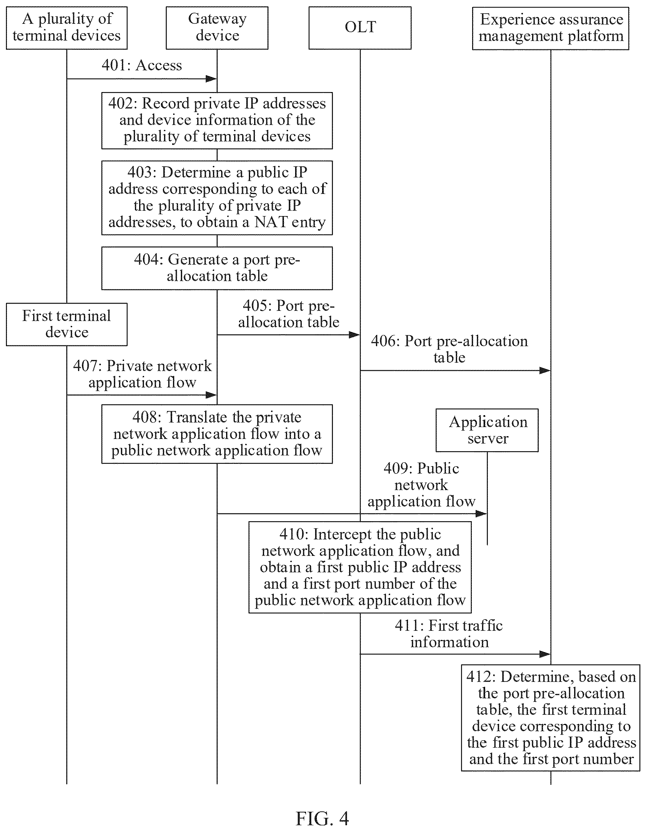

As shown in FIG. 4, an information processing method provided in Embodiment 3 of this application mainly includes the following steps.

401: A gateway device accesses a plurality of terminal devices.

402: The gateway device records private IP addresses and device information of the plurality of terminal devices, to obtain a plurality of private IP addresses.

403: The gateway device determines a public IP address corresponding to each of the plurality of private IP addresses, to obtain a NAT entry, where the NAT entry indicates mapping of the private IP address to the public IP address, and public IP addresses to which any two of the plurality of private IP addresses are mapped are not exactly the same.

404: The gateway device generates a port pre-allocation table, where the port pre-allocation table indicates public IP addresses and port number ranges respectively allocated to the plurality of terminal devices, the public IP addresses allocated to the plurality of terminal devices are not exactly the same, and in the port pre-allocation table, port number ranges that are allocated to any two terminal devices to which a same public IP address is allocated do not overlap.

405: The gateway device sends the port pre-allocation table to an OLT.

Steps 401 to 405 are the same as steps 201 to 205, and details are not described herein again.

406: The OLT sends the port pre-allocation table to an experience assurance management platform.

In this embodiment of this application, after receiving the port pre-allocation table sent by the gateway device, the OLT may forward the port pre-allocation table to the experience assurance management platform.

407: A first terminal device sends a private network application flow to the gateway device, a source IP address of the private network application flow is a first private IP address, and the first terminal device is one of the plurality of terminal devices.

408: The gateway device translates the private network application flow into a public network application flow, where a source IP address of the public network application flow is a first public IP address corresponding to the first private IP address.

409: The gateway device sends the public network application flow.

410: The OLT intercepts the public network application flow, and obtains the first public IP address and a first port number of the public network application flow.

Steps 407 to 410 are the same as steps 206 to 209, and details are not described herein again.

411: The OLT sends first traffic information to the experience assurance management platform, where the first traffic information includes the first public IP address and the first port number of the public network application flow.

In this embodiment of this application, after the OLT receives the public network application flow sent by the gateway device, the OLT may obtain 5-tuple information in the public network application flow, to obtain the source IP address and the first port number, so as to obtain traffic information of the public network application flow. In this case, the OLT may send the first traffic information to the experience assurance management platform, where the first traffic information includes the first public IP address and the first port number of the public network application flow.

412: The experience assurance management platform determines, based on the port pre-allocation table, a first terminal device corresponding to the first public IP address and the first port number, where the first terminal device is one of the plurality of terminal devices.

Refer to the steps performed by the OLT in steps 206 to 208. Details are not described herein again.

In this application, a port pre-allocation table is first received, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap. In this case, when a first public IP address and a first port number of a public network application flow are obtained, a first terminal device corresponding to the first public IP address and the first port number may be determined based on the port pre-allocation table, and the first terminal device is one of the plurality of terminal devices, so that the corresponding terminal device that sends the public network application flow can be identified, and then a terminal device on which a network fault occurs can be determined when a poor quality of service event occurs, so as to improve quality of service.

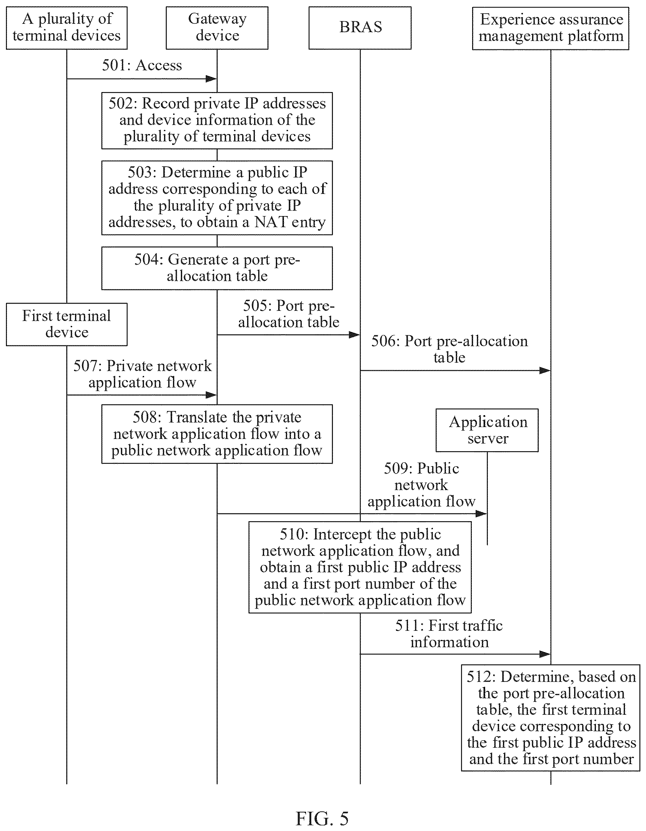

As shown in FIG. 5, an information processing method provided in Embodiment 4 of this application mainly includes the following steps.

501: A gateway device accesses a plurality of terminal devices.

502: The gateway device records private IP addresses and device information of the plurality of terminal devices, to obtain a plurality of private IP addresses.

503: The gateway device determines a public IP address corresponding to each of the plurality of private IP addresses, to obtain a NAT entry, where the NAT entry indicates mapping of the private IP address to the public IP address, and public IP addresses to which any two of the plurality of private IP addresses are mapped are not exactly the same.

504: The gateway device generates a port pre-allocation table, where the port pre-allocation table indicates public IP addresses and port number ranges respectively allocated to the plurality of terminal devices, the public IP addresses allocated to the plurality of terminal devices are not exactly the same, and in the port pre-allocation table, port number ranges that are allocated to any two terminal devices to which a same public IP address is allocated do not overlap.

505: The gateway device sends the port pre-allocation table to a BRAS.

Steps 501 to 505 are the same as steps 301 to 305, and details are not described herein again.

506: The BRAS sends the port pre-allocation table to an experience assurance management platform.

In this embodiment of this application, after receiving the port pre-allocation table sent by the gateway device, the BRAS may forward the port pre-allocation table to the experience assurance management platform.

507: A first terminal device sends a private network application flow to the gateway device, a source IP address of the private network application flow is a first private IP address, and the first terminal device is one of the plurality of terminal devices.

508: The gateway device translates the private network application flow into a public network application flow, where a source IP address of the public network application flow is a first public IP address corresponding to the first private IP address.

509: The gateway device sends the public network application flow.

510: The BRAS intercepts the public network application flow, and obtains the first public IP address and a first port number of the public network application flow.

Steps 507 to 510 are the same as steps 306 to 309, and details are not described herein again.

511: The BRAS sends first traffic information to the experience assurance management platform, where the first traffic information includes the first public IP address and the first port number of the public network application flow.

Refer to the steps performed by the OLT in step 411. Details are not described herein again.

512: The experience assurance management platform determines, based on the port pre-allocation table, a first terminal device corresponding to the first public IP address and the first port number, where the first terminal device is one of the plurality of terminal devices.

Refer to step 412. Details are not described herein again.

In this application, a port pre-allocation table is first received, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap. In this case, when a first public IP address and a first port number of a public network application flow are obtained, a first terminal device corresponding to the first public IP address and the first port number may be determined based on the port pre-allocation table, and the first terminal device is one of the plurality of terminal devices, so that the corresponding terminal device that sends the public network application flow can be identified, and then a terminal device on which a network fault occurs can be determined when a poor quality of service event occurs, so as to improve quality of service.

It should be noted that, for brief description, the foregoing method embodiments are represented as a series of action combinations. However, a person skilled in the art should understand that this application is not limited to the described action sequence, because some steps may be performed in other sequences or simultaneously according to this application. It should be further appreciated by a person skilled in the art that embodiments described in this specification all belong to example embodiments, and the involved actions and modules are not necessarily required by this application.

To better implement the solutions of embodiments of this application, a related apparatus for implementing the solutions is further provided below.

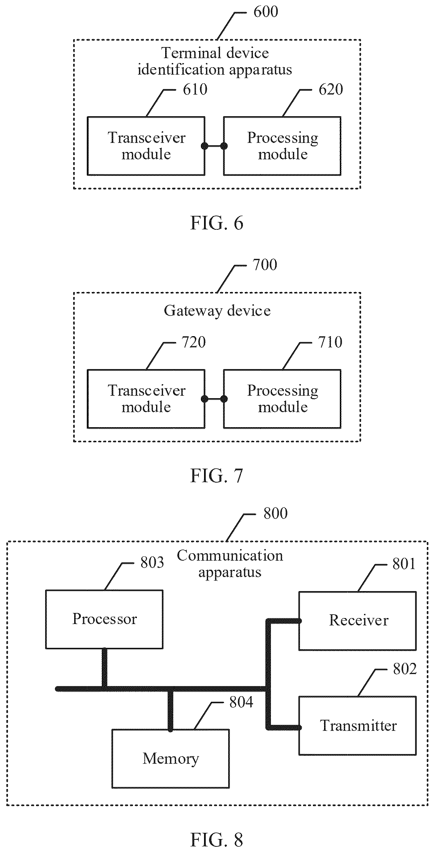

As shown in FIG. 6, a terminal device identification apparatus 600 provided in an embodiment of this application may include: a transceiver module 610, configured to receive a port pre-allocation table, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap; and a processing module 620, configured to obtain a first public IP address and a first port number of a public network application flow, where the processing module 620 is further configured to determine, based on the port pre-allocation table, a first terminal device corresponding to the first public IP address and the first port number, and the first terminal device is one of the plurality of terminal devices.

In some possible implementations, the transceiver module 610 is further configured to receive the public network application flow, and the processing module 620 is further configured to obtain the first public IP address and the first port number from the public network application flow.

In some possible implementations, the transceiver module 610 is specifically configured to receive first traffic information, where the first traffic information includes the first public IP address and the first port number of the public network application flow.

As shown in FIG. 7, a gateway device 700 provided in an embodiment of this application may include: a processing module 710, configured to generate a port pre-allocation table, where the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap; and a transceiver module 720, configured to send the port pre-allocation table.

In some possible implementations, the processing module 710 is further configured to access the plurality of terminal devices. The processing module 710 is further configured to record private IP addresses and device information of the plurality of terminal devices, to obtain a plurality of private IP addresses. The processing module 710 is further configured to determine a public IP address corresponding to each of the plurality of private IP addresses, to obtain a NAT entry, where the NAT entry indicates mapping of the private IP address to the public IP address, and public IP addresses to which any two of the plurality of private IP addresses are mapped are not exactly the same.

In some possible implementations, the transceiver module 720 is further configured to receive a private network application flow sent by a first terminal device, where a source IP address of the private network application flow is a first private IP address, and the first terminal device is one of the plurality of terminal devices. The processing module 710 is further configured to translate the first private IP address of the private network application flow into a first public IP address based on the NAT entries, to obtain a public network application flow, where a source IP address of the public network application flow is the first public IP address, and the first public IP address is a public IP address to which the first private IP address is mapped based on the NAT entries. The transceiver module 720 is further configured to send the public network application flow.

It should be noted that, because content such as information exchange between the modules/units in the apparatus and the execution processes thereof is based on the same concept as the method embodiments of this application, technical effects of the content are the same as those of the method embodiments of this application. For specific content, refer to the descriptions in the foregoing method embodiments of this application. Details are not described herein again.

An embodiment of this application further provides a computer storage medium. The computer storage medium stores a program. The program performs some or all of the steps recorded in the foregoing method embodiments.

The following describes another communication apparatus according to an embodiment of this application. As shown in FIG. 8, a communication apparatus 800 includes:
a receiver 801, a transmitter 802, a processor 803, and a memory 804. In some embodiments of this application, the receiver 801, the transmitter 802, the processor 803, and the memory 804 may be connected through a bus or in another manner. In FIG. 8, a connection through the bus is used as an example.

The memory 804 may include a read-only memory and a random access memory, and provide instructions and data to the processor 803. A part of the memory 804 may further include a non-volatile random access memory (non-volatile random access memory, NVRAM). The memory 804 stores an operating system and operation instructions, an executable module or a data structure, a subset thereof, or an extended set thereof. The operation instructions may include various operation instructions for implementing various operations. The operating system may include various system programs, to implement various basic services and process a hardware-based task.

The processor 803 controls an operation of the communication apparatus 800, and the processor 803 may also be referred to as a central processing unit (central processing unit, CPU). During specific application, components of the communication apparatus 800 are coupled together by using a bus system. In addition to a data bus, the bus system may include a power bus, a control bus, a status signal bus, and the like. However, for clear description, various types of buses in the figure are referred to as the bus system.

The method disclosed in the foregoing embodiments of this application may be applied to the processor 803, or may be implemented by the processor 803. The processor 803 may be an integrated circuit chip and has a signal processing capability. In an implementation process, the steps of the foregoing method may be completed through an integrated logic circuit of hardware in the processor 803 or by using instructions in a form of software. The foregoing processor 803 may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, transistor logic device, or a discrete hardware component, and may implement or execute the methods, steps, and logical block diagrams disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of a hardware module and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory 804. The processor 803 reads information in the memory 804, and completes the steps of the foregoing method together with the hardware of the processor 803.

The receiver 801 may be configured to: receive input digital or character information, and generate a signal input related to a related setting and function control. The transmitter 802 may include a display device, for example, a display screen, and the transmitter 802 may be configured to output the digital or character information through an external interface.

In embodiments of this application, the processor 803 is configured to perform the foregoing information processing method.

In another possible design, when the terminal device identification apparatus 600, the gateway device 700, or the communication apparatus 800 is a chip, a processing unit and a communication unit are included. The processing unit may be, for example, a processor, and the communication unit may be, for example, an input/output interface, a pin, or a circuit. The processing unit may execute computer-executable instructions stored in a storage unit, to enable a chip in a terminal to perform the method for sending wireless report information according to any one of the implementations of the first aspect. Optionally, the storage unit is a storage unit in the chip, for example, a register or a cache. Alternatively, the storage unit may be a storage unit that is located in the terminal and that is located outside the chip, for example, a read-only memory (read-only memory, ROM), another type of static storage device that can store static information and instructions, or a random access memory (random access memory, RAM).

Any one of the processors mentioned above may be a general-purpose central processing unit, a microprocessor, an ASIC, or one or more integrated circuits for controlling execution of the program of the method.

In addition, it should be noted that the apparatus embodiments described above are merely examples. The units described as separate components may or may not be physically separate, and the components displayed as units may or may not be physical units, that is, may be located in one place, or may be distributed on a plurality of network units. Some or all the modules may be selected based on an actual need to achieve the objectives of the solutions of embodiments. In addition, in the accompanying drawings of the apparatus embodiments provided in this application, connection relationships between the modules indicate that the modules have a communication connection with each other, which may be specifically implemented as one or more communication buses or signal cables.

Based on the descriptions of the foregoing implementations, a person skilled in the art may clearly understand that this application may be implemented by software in addition to necessary general-purpose hardware, or certainly, may be implemented by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used for implementation, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. An information processing method, comprising:
receiving a port pre-allocation table, wherein the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap;
obtaining a first public IP address and a first port number of a public network application flow; and
determining, based on the port pre-allocation table, a first terminal device corresponding to the first public IP address and the first port number, wherein the first terminal device is one of the plurality of terminal devices.

2. The method according to claim 1, wherein entries of the port pre-allocation table comprise a public IP address, a port number range, and device information, and the device information comprises a MAC address of one of the plurality of terminal devices.

3. The method according to claim 2, wherein the device information comprises a device account and a device type.

4. The method according to claim 2 or 3, wherein the device information comprises an access manner, an access frequency, and signal strength.

5. The method according to any one of claims 1 to 4, wherein the obtaining the first public IP address and the first port number of the public network application flow comprises:
receiving the public network application flow; and
obtaining the first public IP address and the first port number from the public network application flow.

6. The method according to any one of claims 1 to 4, wherein the obtaining the first public IP address and the first port number of the public network application flow comprises:
receive first traffic information, wherein the first traffic information comprises the first public IP address and the first port number of the public network application flow.

7. An information processing method, comprising:
generating a port pre-allocation table, wherein the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap; and
sending the port pre-allocation table.

8. The method according to claim 7, wherein before the generating the port pre-allocation table, the method comprises:
accessing the plurality of terminal devices;
recording private IP addresses and device information of the plurality of terminal devices, to obtain a plurality of private IP addresses; and
determining a public IP address corresponding to each of the plurality of private IP addresses, to obtain a NAT entry, wherein the NAT entry indicates mapping of a private IP address to a public IP address, and public IP addresses to which any two of the plurality of private IP addresses are mapped are not exactly the same.

9. The method according to claim 8, wherein the method further comprises:
receiving a private network application flow sent by a first terminal device, wherein a source IP address of each application flow in the private network application flows is a first private IP address, and the first terminal device is one of the plurality of terminal devices;
translating the first private IP address of the private network application flow into a first public IP address based on the NAT entry, to obtain a public network application flow, wherein the first public IP address is a public IP address to which the first private IP address is mapped based on the NAT entry; and
sending the public network application flow.

10. The method according to any one of claims 7 to 9, wherein entries of the port pre-allocation table comprise a public IP address, a port number range, and device information, and the device information comprises a MAC address of one of the plurality of terminal devices.

11. The method according to claim 10, wherein the device information comprises a device account and a device type.

12. The method according to claim 10 or 11, wherein the device information comprises an access manner, an access frequency, and signal strength.

13. A terminal device identification apparatus, comprising:
a transceiver module, configured to receive a port pre-allocation table, wherein the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap; and
a processing module, configured to obtain a first public IP address and a first port number of a public network application flow, wherein
the processing module is further configured to determine, based on the port pre-allocation table, a first terminal device corresponding to the first public IP address and the first port number, wherein the first terminal device is one of the plurality of terminal devices.

14. The terminal device identification apparatus according to claim 13, wherein
the transceiver module is further configured to receive the public network application flow; and
the processing module is further configured to obtain the first public IP address and the first port number from the public network application flow.

15. The terminal device identification apparatus according to claim 13 or 14, wherein the transceiver module is specifically configured to:
receive first traffic information, wherein the first traffic information comprises the first public IP address and the first port number of the public network application flow.

16. A gateway device, comprising:
a processing module, configured to generate a port pre-allocation table, wherein the port pre-allocation table indicates public IP addresses and port number ranges that are respectively allocated to a plurality of terminal devices, the public IP addresses allocated to the plurality of terminal devices are not exactly the same, and in the port pre-allocation table, port number ranges that are allocated to any two terminal devices to which a same public IP address is allocated do not overlap; and
a transceiver module, configured to send the port pre-allocation table.

17. The gateway device according to claim 16, wherein
the processing module is further configured to access the plurality of terminal devices;
the processing module is further configured to record private IP addresses and device information of the plurality of terminal devices, to obtain a plurality of private IP addresses; and
the processing module is further configured to determine a public IP address corresponding to each of the plurality of private IP addresses, to obtain a NAT entry, wherein the NAT entry indicates mapping of a private IP address to a public IP address, and public IP addresses to which any two of the plurality of private IP addresses are mapped are not exactly the same.

18. The gateway device according to claim 17, wherein
the transceiver module is further configured to receive a private network application flow sent by a first terminal device, wherein a source IP address of the private network application flow is a first private IP address, and the first terminal device is one of the plurality of terminal devices;
the processing module is further configured to translate the first private IP address of the private network application flow into a first public IP address based on the NAT entry, to obtain a public network application flow, wherein the first public IP address is a public IP address to which the first private IP address is mapped based on the NAT entry; and
the transceiver module is further configured to send the public network application flow.

19. A computer-readable storage medium, wherein the computer-readable storage medium stores a program, and the program enables a computer device to perform the method according to any one of claims 1 to 12.

20. A computer program product, wherein the computer program product comprises computer-executable instructions, the computer-executable instructions are stored in a computer-readable storage medium, at least one processor of a device reads the computer-executable instructions from the computer-readable storage medium, and the at least one processor executes the computer-executable instructions, to enable the device to perform the method according to any one of claims 1 to 12.

21. A communication apparatus, wherein the communication apparatus comprises at least one processor, a memory, and a communication interface, wherein
the at least one processor is coupled to the memory and the communication interface;
the memory is configured to store instructions, the processor is configured to execute the instructions, and the communication interface is configured to communicate, under control of the at least one processor, with another communication apparatus; and
when the instructions are executed by the at least one processor, the at least one processor is enabled to perform the method according to any one of claims 1 to 12.

22. A chip system, wherein the chip system comprises a processor and a memory, the memory and the processor are interconnected through a line, the memory stores instructions, and the processor is configured to perform the method according to any one of claims 1 to 12.
